# EUROPEAN PATENT SPECIFICATION

(11) **EP 3 810 396 B1**
(45) Date of publication and mention of the grant of the patent: **06.09.2023**
(21) Application number: 19827505.9
(22) Date of filing: 21.06.2019
(51) Int. Cl.: B29C 48/05, B29C 48/19, C09J 7/22, B29C 48/345

(54) **COEXTRUDED POLYMERIC ARTICLE AND METHOD OF MAKING THE SAME**
COEXTRUDIERTER POLYMERARTIKEL UND VERFAHREN ZUR HERSTELLUNG DAVON
ARTICLE POLYMÈRE COEXTRUDÉ ET PROCÉDÉ DE FABRICATION ASSOCIÉ

(30) Priority: 25.06.2018 US 201862689491 P; 01.08.2018 US 201862713214 P
(43) Date of publication of application: 28.04.2021
(73) Proprietor: 3M Innovative Properties Company, Saint Paul, Minnesota 55133-3427 (US)
(72) Inventor: AUSEN, Ronald W., Saint Paul, Minnesota 55133-3427 (US); KOPECKY, William J., Saint Paul, Minnesota 55133-3427 (US); SAHNI, Vasav, Saint Paul, Minnesota 55133-3427 (US); KHIEU, Sithya S., Saint Paul, Minnesota 55133-3427 (US); HARNDEN, Shannon R. A., Saint Paul, Minnesota 55133-3427 (US); CARUSO DAILEY, Mary M., Saint Paul, Minnesota 55133-3427 (US)
(74) Representative: Mathys & Squire
(86) International application number: PCT/IB2019/055266
(87) International publication number: WO 2020/003083

(56) References cited:
- US-A1- 2001 013 277
- US-A1- 2003 203 155
- US-A1- 2016 347 039

## Description

### Background

Coextruded polymeric articles (including layers) having projections are known in the art. For example, it is known to provide a co-extruded, layer structures where the layer is partitioned, not as coextensive layers in the thickness direction, but as stripes or strands along the width dimension of the layer. This has sometimes been called "side-by-side" co-extrusion.

There is a desire for additional polymeric articles with projections that offer different configurations and/or properties (e.g., adhesive properties) over conventional articles. Some adhesive systems that switch from a state of relatively low or no adhesion to a state of much higher adhesion upon application of a certain trigger (commonly called "adhesion on demand" systems) are known. Many of these systems use triggers such as solvents, ultra violet light, heat, or magnetic forces, to create tiered adhesive performance once or repetitively. These systems are limited in applications for several reasons. For many of these triggers, the adhesive system must contain specific chemical groups, which restricts usage to applications where those chemical groups can be tolerated. These systems can be used only where a particular trigger is available and can be effectively applied to the adhesive system. Further, some triggers are difficult or inconvenient for consumers to use. Certain triggers, as well as the chemical groups in the adhesive that respond to such triggers, can be cost-prohibitive.

US 2016/347039 A1 discloses the preamble of claim 1.

There is a continuing desire for new coextruded polymeric article constructions. Further, there is a need for "adhesion on demand" systems where the trigger is applicable to all adhesive chemistries, the trigger is more broadly or even universally available, the trigger is easy to apply, not only industrially, but by a consumer, and the adhesion-on-demand system is not exceedingly expensive.

### Summary

In one aspect, the present disclosure describes a first coextruded polymeric article comprising:
first segments each having first and second opposed major surfaces and a thickness, the first segments comprising first material;
second segments comprising second material, wherein adjacent first segments are joined together via a second segment, wherein at least 10 (in some embodiments, at least 15, 20, 25, 30, 35, 40, 45, 50, 55, 60, 65, 70, 75, 80, 85, 90, at least 95, or even 100) percent by number of the second segments extend from the second major surface past the first major surface of each first adjacent segment and has a distal end, the second segments having first and second opposed major surfaces, wherein there is a gap between adjacent second segments; and
adhesive on the first and second major surfaces of at least every other second segment except a portion of the major surface adjacent to the respective distal end is free of the adhesive (i.e., i.e., less than 1 g/m²),
wherein the first segments, second segments, and adhesive each extend continuously for at least 5 mm (in some embodiments, at least 10 mm, 25 mm, 50 mm, 1 cm, 5 cm, 10 cm, 50 cm, 75 cm, 1 m, 5 m, 10 m, 25 m, 50 m, 100 m, 500 m, or even at least 1000 m).

In some embodiments, the first coextruded article has a first set of second segments at least partial filling the gaps in a second set of second segments, wherein the second segments of the first set at least partial fill the gaps of the second segments of the second set.

In another aspect, the present disclosure describes a method for making the first coextruded polymeric article described herein, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, a third plurality of a repeating sequence of shims that together provide a fluid passageway between the first cavity and a first orifice and also together provide a fluid passageway between the third cavity and a third orifice, and a fourth plurality of a repeating sequence of shims that together provide a fluid passageway between the first cavity and a first orifice;
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

In another aspect, the present disclosure describes a second coextruded polymeric article comprising:
first segments each having first and second opposed major surfaces and a thickness, the first segments comprising first material;
second segments comprising second material, wherein adjacent first segments are joined together via a second segment, wherein at least 10 (in some embodiments, at least 15, 20, 25, 30, 35, 40, 45, 50, 55, 60, 65, 70, 75, 80, 85, 90, at least 95, or even 100) percent by number of the second segments extend from the second major surface past the first major surface of each first adjacent segment and has a distal end, the second segments having first and second opposed major surfaces, wherein there is a gap between adjacent second segments; and
adhesive on the first major surface of the first segments,
wherein the first segments, second segments and adhesive each extend continuously for at least 5 mm (in some embodiments, at least 10 mm, 25 mm, 50 mm, 1 cm, 5 cm, 10 cm, 50 cm, 75 cm, 1 m, 5 m, 10 m, 25 m, 50 m, 100 m, 500 m, or even at least 1000 m).

In another aspect, the present disclosure describes a method of making the second coextruded polymeric article described herein, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, wherein the second orifice is collinear with the first orifice, wherein the second orifice extends from the first side of the first orifice to a distance past the second side of the first orifice,
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

In some embodiments, the second coextruded article has a first set of second segments at least partial filling the gaps in a second set of second segments, wherein the second segments of the first set at least partial fill the gaps of the second segments of the second set.

In another aspect, the present disclosure describes an article comprising two coextruded polymeric articles described herein, wherein the second segments of one coextruded polymeric articles at least partial fill the gaps of the other coextruded polymeric article, and wherein the second segments of the other coextruded polymeric articles at least partial fill the gaps of the one coextruded polymeric article.

In some embodiments of coextruded polymeric articles described herein can include adhesive articles, household cleaning products (e.g., as mops, dusters, brushes, cleaning cloths, and lint rollers), and wall attachments.

In some embodiments of coextruded polymeric articles described herein can provide a tiered performance, such that for some property of merit (e.g., an adhesive level), the coextruded polymeric article exhibits one level of or value for that property in a base condition or state of use, and at least one different level of or value for that property when in at least one triggered condition or state of use.

In some embodiments of coextruded polymeric articles described herein can provide multifunctional features in packaging and impact protection products where the coextruded polymeric article exhibits cushioning properties in addition to having permanent or recloseable locking features.

### Brief Description of the Drawings

FIG. 1 is a schematic cross-sectional view of an exemplary coextruded polymeric article described herein.
FIG. 2 is a schematic cross-sectional view of another exemplary coextruded polymeric article described herein.
FIG. 3 is a schematic cross-sectional view of another exemplary coextruded polymeric article described herein.
FIG. 4 is a schematic cross-sectional view of another exemplary coextruded polymeric article described herein.
FIG. 5 is a schematic cross-sectional view of an exemplary die cavity pattern just upstream from the dispensing slot of the die employed in the formation of an exemplary coextruded polymeric article described herein.
FIG. 6 is a schematic cross-sectional view of an exemplary die cavity pattern just upstream from the dispensing slot of the die employed in the formation of an exemplary coextruded polymeric article described herein.
FIG. 7A is a plan view of an exemplary embodiment of a shim suited to form a sequence of shims capable of forming an exemplary coextruded polymeric article, for example, as shown in the schematic cross-sectional views of FIG. 1.
FIG. 7B is an expanded region near the dispensing surface of the shim shown in FIG. 7A.
FIG. 8A is a plan view of an exemplary embodiment of a shim suited to form a sequence of shims capable of forming a coextruded polymeric article, for example, as shown in the schematic cross-sectional views of FIGS. 1 and 2.
FIG. 8B is an expanded region near the dispensing surface of the shim shown in FIG. 8A.
FIG. 9A is a plan view of an exemplary embodiment of a shim suited to form a sequence of shims capable of forming a coextruded polymeric article, for example, as shown in the schematic cross-sectional views of FIG. 1.
FIG. 9B is an expanded region near the dispensing surface of the shim shown in FIG. 9A.
FIG. 10A is a plan view of an exemplary embodiment of a shim suited to form a sequence of shims capable of forming a coextruded polymeric article, for example, as shown in the schematic cross-sectional views of FIG. 1.
FIG. 10B is an expanded region near the dispensing surface of the shim shown in FIG. 10A.
FIG. 11A is a plan view of an exemplary embodiment of a shim suited to form a sequence of shims capable of forming a coextruded polymeric article, for example, as shown in the schematic cross-sectional views of FIG. 2.
FIG. 11B is an expanded region near the dispensing surface of the shim shown in FIG. 11A.
FIG. 12A is a plan view of an exemplary embodiment of a shim suited to form a sequence of shims capable of forming a coextruded polymeric article, for example, as shown in the schematic cross-sectional views of FIG. 2.
FIG. 12B is an expanded region near the dispensing surface of the shim shown in FIG. 12A.
FIG. 13A is a plan view of an exemplary embodiment of a shim suited to form a sequence of shims capable of forming a coextruded polymeric article, for example, as shown in the schematic cross-sectional views of FIG. 2.
FIG. 13B is an expanded region near the dispensing surface of the shim shown in FIG. 13A.
FIG. 14 is a perspective assembly drawing of several different exemplary sequences of shims employing the shims of FIGS. 7A, 8A, 9A, and 10A for making exemplary coextruded polymeric articles described herein, segments and protrusions in a repeating arrangement as shown in FIG. 1.
FIG. 15 is a perspective view of the some of the sequence of shims of FIG. 14, further exploded to reveal some individual shims.
FIG. 16 is a perspective assembly drawing of several different exemplary sequences of shims employing the shims of FIGS. 8A, 11A, 12A, and 13A for making exemplary coextruded polymeric articles described herein, segments and protrusions in a repeating arrangement as shown in FIG. 2.
FIG. 17 is a perspective view of the some of the sequence of shims of FIG. 16, further exploded to reveal some individual shims.
FIG. 18 is an exploded perspective view of an example of a mount suitable for an extrusion die composed of multiple repeats of the sequence of shims of FIG. 8A.
FIG. 19 is a perspective view of the mount of FIG. 10A in an assembled state.

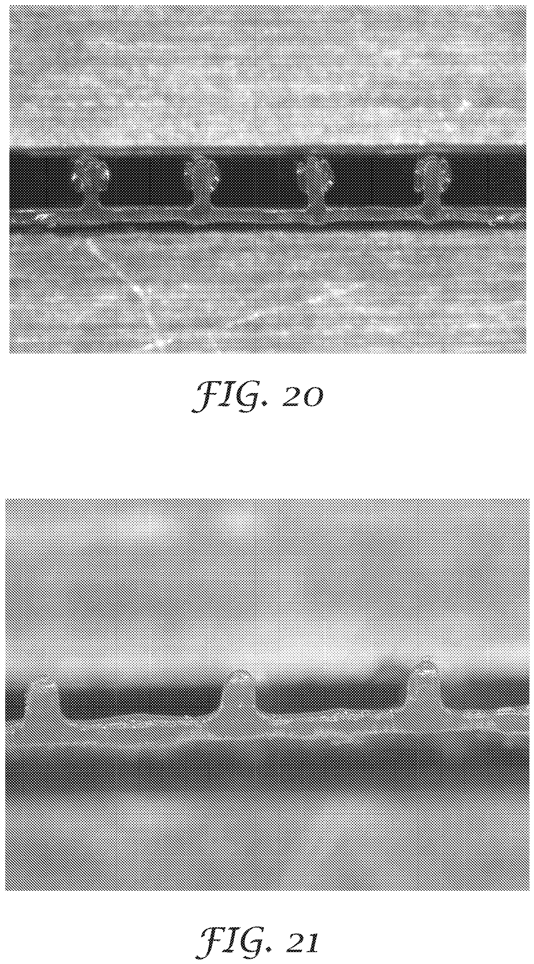

FIG. 20 is an optical image of the Example 1 article.
FIG. 21 is an optical image of the Example 2 article.

### Detailed Description

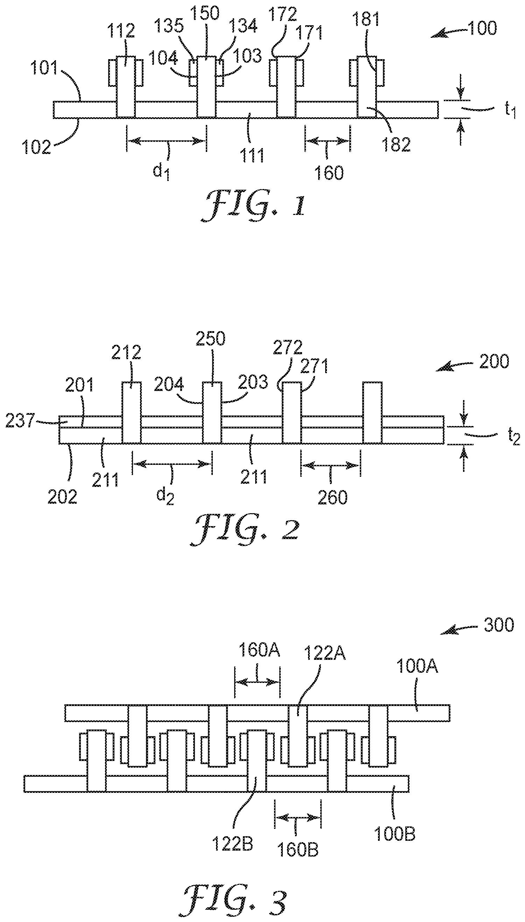

Referring to FIG. 1, exemplary coextruded polymeric article 100 comprises first and second segments 111, 112. First segments 111 each have first and second opposed major surfaces 101, 102 and thickness ti. First segments 111 comprise first material. Second segments 112 comprise second material. Adjacent first segments 111 are joined together via second segment 112. Second segments 112 extend from second major surface 102 past first major surface 101 of each first adjacent segment 111 and has distal end 150. Second segments 112 have first and second opposed major surfaces 103, 104. There is gap 160 between adjacent second segments 112. There is adhesive 134, 135 on first and second major surfaces 103, 104 of at least every other second segment 112 except a portion 171, 172 of major surface adjacent to respective distal end 150 is free of adhesive. First segments 111, second segments 112, and adhesive 134, 135 each extend continuously for at least 5 mm. Distance d₁ is the repeating distance between second segments and can be used to calculate the second segments per centimeter. Region 1 with demarcation between adhesive and second segments is shown as reference 181. Region 2 without demarcation is shown as reference 182.

In some embodiments of the first coextruded polymeric article described herein, the adhesive is on the first and second major surfaces of each second segment except a portion of the major surface adjacent to the respective distal end is free of the adhesive. In some embodiments of the first coextruded polymeric article described herein, the distal ends are free of adhesive.

In some embodiments of the first coextruded polymeric article described herein, each second segment has a height extending from the first major surface of the adjacent first segment to the distal end of that second segment, wherein the adhesive extends up to 50 (in some embodiments, 60, 70, 75, 80, 85, 90, or even up to 95) percent of the height of that second segment from the first major surface of the first segment toward the distal end.

In some embodiments of the first coextruded polymeric article described herein, the adhesive is also on the first major surface of the first segment between second segments. In some embodiments of the first coextruded polymeric article described herein, a portion of the first major surface of the first segment between second segments is free of adhesive.

Referring to FIG. 2, exemplary coextruded polymeric article 200 comprises first and second segments 211212. First segments 211 each having first and second opposed major surfaces 201, 202, and thickness t₂. First segments 211 comprise first material. Second segments 212 comprise second material. Adjacent first segments 211 are joined together via second segment 212. Second segments 212 extend from second major surface 202 past first major surface 201 of each first adjacent segment 211 and has distal end 250. Second segments 212 have first and second major surface 203, 204. There is gap 260 between adjacent second segments 212. There is adhesive 237 on first major surface 201 of first segments 211. First segments 211, second segments 212, and adhesive 237 each extend continuously for at least 5 mm. Distance d₂ is the repeating distance between second segments and can be used to calculate the second segments per centimeter.

Referring to FIG. 3, exemplary article 300 comprises two coextruded polymeric articles 100 shown FIG. 1 and labeled now as 100A and 100B. Second segments 122A of coextruded polymeric article 100A at least partial fill gaps 160B of coextruded polymeric article 100B. Second segments 122B of the coextruded polymeric article 100B at least partial fill gaps 160A of the coextruded polymeric article 100A.

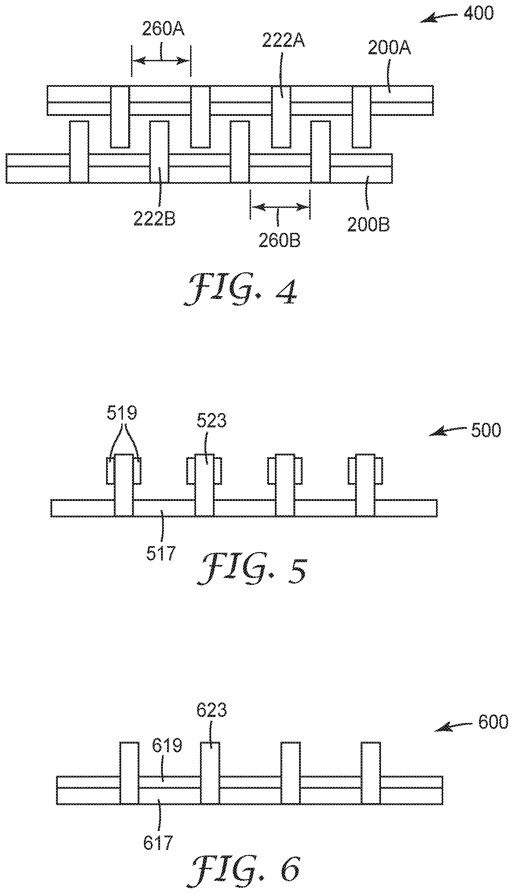

Referring to FIG. 4, exemplary article 400 comprises two coextruded polymeric articles 200 shown FIG. 2 and labeled now as 200A and 200B. Second segments 222A of coextruded polymeric article 200A at least partial fill gaps 260B of coextruded polymeric article 200B. Second segments 222B of the coextruded polymeric article 200B at least partial fill gaps 260A of the coextruded polymeric article 200A.

Articles such as shown in FIGS. 3 and 4 can be used in self-mating closure and attachment tape applications. The performance of self-mating adhesion may be controlled, for example, by the number of second segments per centimeter, and also by the height extension from the first segment of the second segment, and the amount of adhesive coverage of the second segment. The contact of structures shown in FIG. 4 may be controlled, for example, with the top area of the second segment and again the number of second segments per centimeter. Engagement of articles such as shown in FIG. 3 can provide adhesive to adhesive bonding, which may provide significant bond strength. In some embodiments, this bond may provide a debonding geometry that is typical of shear mode debonding, when the article is disassembled in traditional peel mode.

In some embodiments of the first coextruded polymeric article described herein, the first and second materials are at least one of a thermoplastic resin (e.g., at least one of, including copolymers and blends thereof, a polyolefin (e.g., polypropylene and polyethylene), polyvinyl chloride, a polystyrene, nylon, a polyester (e.g., polyethylene terephthalate) or an elastomer (e.g., an ABA block copolymer, a polyurethane, a polyolefin elastomer, a polyurethane elastomer, a metallocene polyolefin elastomer, a polyamide elastomer, an ethylene vinyl acetate elastomer, and a polyester elastomer)).

In some embodiments, the adhesive is at least one of an acrylate copolymer pressure sensitive adhesive, a rubber-based adhesive (e.g., those based on at least one of natural rubber, polyisobutylene, polybutadiene, butyl rubber, or styrene block copolymer rubber), a silicone polyurea-based adhesive, a silicone polyoxamide-based adhesive, a polyurethane-based adhesive, or a poly(vinyl ethyl ether)-based adhesive.

In some embodiments, the first segments comprise first material, the second segments comprise second material, and the adhesive comprises third material, wherein the first and second are the same material and different from the third material. In some embodiments, the first segments comprise first material, the second segments comprise second material, and the adhesive comprises third material, wherein the first, second, and third materials are different from each other. "Different" as used herein means at least one of (a) a difference of at least 2% in at least one infrared peak, (b) a difference of at least 2% in at least one nuclear magnetic resonance peak, (c) a difference of at least 2% in the number average molecular weight, or (d) a difference of at least 5% in polydispersity. Examples of differences in polymeric materials that can provide the difference between polymeric materials include composition, microstructure, color, and refractive index. The term "same" in terms of polymeric materials means not different.

In some embodiments, there is a demarcation line between the first and second segments. In some embodiments, there is a demarcation line between the adhesive and the second segments. These constructions can be formed by methods described herein where materials are coextruded in a manner that results in a distinct line of orientation visible at the polymer boundary between connected segments and protrusions. This demarcation line or boundary region between connected segments and protrusions can be detected using Differential Scanning Calorimetry. Comparing by temperature modulated differential scanning calorimetry a region containing mostly a demarcation line (Region 1 (181)) versus a region that does not substantially contain material from the demarcation line (Region 2 (182)), shown in FIG. 1, a difference in heat flow/heat capacity is observed that is believed to be consistent with an energy release or reduction in molecular orientation/internal stress. That is, although not wanting to be bound by theory, it is believed that the thermal signatures of the regions may be a combination of material thermal transitions and the material response to retained thermal/processing history.

In another aspect, the present disclosure describes a method for making the first coextruded polymeric article described herein, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, a third plurality of a repeating sequence of shims that together provide a fluid passageway between the first cavity and a first orifice and also together provide a fluid passageway between the third cavity and a third orifice, and a fourth plurality of a repeating sequence of shims that together provide a fluid passageway between the first cavity and a first orifice;
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

In another aspect, the present disclosure describes a method of making the second coextruded polymeric article described herein, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, wherein the second orifice is collinear with the first orifice, wherein the second orifice extends from the first side of the first orifice to a distance past the second side of the first orifice,
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

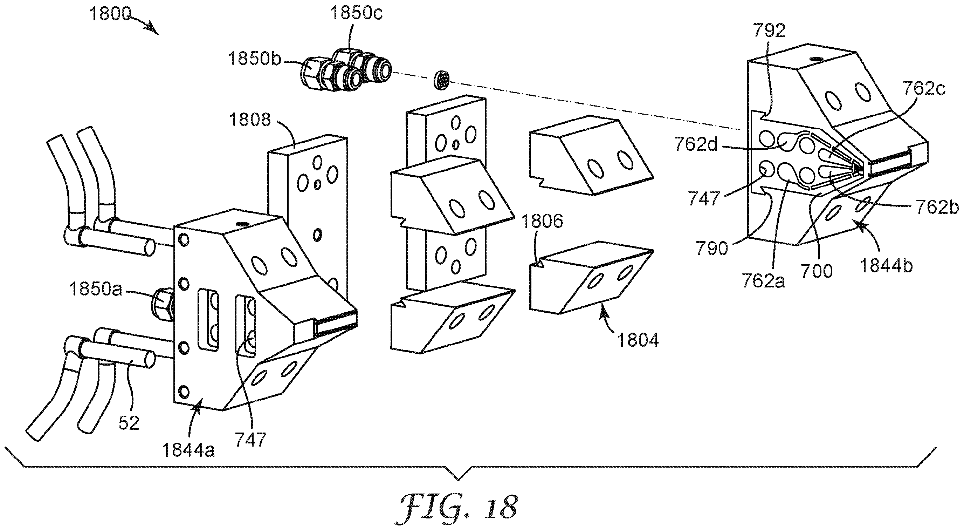

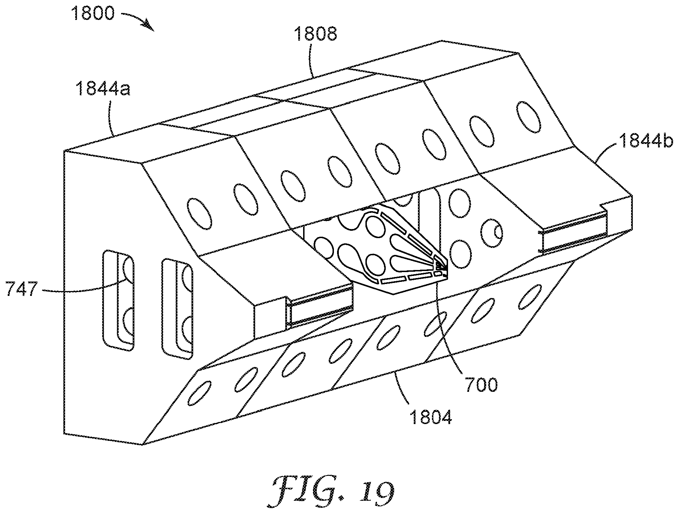

Coextruded polymeric articles described herein (including that shown in FIGS. 1 and 2), each of the segments and adhesive portions may be considered monolithic (i.e., having a generally uniform composition) and are not fibrous. The adhesive can extend to, and can be bonded to, but does not pass into the second segment. This is accomplished by formation of weld lines, called demarcation lines at the die region where the dispensing orifices merge together at the distal opening. Further, the segments and the adhesive are not nonwoven materials, nor are they coated or added via as a secondary step. In some embodiments described below, however, portions of the articles may be apertured. Typically, the segments and adhesive are co-extruded and melt bonded together to form coextruded, continuous, polymeric articles. Referring again to FIG. 1, coextruded polymeric article 100 can be prepared, for example, by extrusion from a die having a variety of passageways from cavities within the die to a dispensing slot, including exemplary dies described herein (see, e.g., FIGS. 18 and 19). The die may conveniently be comprised of a plurality of shims. In some embodiments a first plurality of a repeating sequence of shims that together provide a fluid passageway between the first cavity and a first orifice, a second plurality of a repeating sequence of shims that together provide a fluid passageway between the second cavity and a second orifice, a third plurality of a repeating sequence of shims that together provide a fluid passageway between the first cavity and a first orifice and also together provide a fluid passageway between the third cavity and a third orifice.

In some embodiments, the shims will be assembled according to a plan that provides a sequence of shims of diverse types. Since different applications may have different requirements, the sequences can have diverse numbers of shims. The sequence may be a repeating sequence that is not limited to a particular number of repeats in a particular zone. Or the sequence may not regularly repeat, but different sequences of shims may be used. The shape of the passageways within, for example, a sequence of shims, may be identical or different. Examples of passageway cross-sectional shapes include round, square, and rectangular shapes. In some embodiments, the shims that provide a passageway between one cavity and the dispensing slot might have a flow restriction compared to the shims that provide a passageway between another cavity and the dispensing slot. The width of the distal opening within, for example, a different sequence of shims, may be identical or different. For example, the portion of the distal opening provided by the shims that provide a passageway between one cavity and the dispensing slot could be narrower than the portion of the distal opening provided by the shims that provide a passageway between another cavity and the dispensing slot. In general, the distal opening to create the second segments is much longer than the distal opening to create the first segment.

Individual cavities and passageways provide a conduit for polymer to orifices to create the segments and adhesive portions. These individual flow streams merge together to form a continuous, solid coextruded polymeric article, at the die slot portion of the die. Spacer shims provide connecting slots to form demarcation lines connecting the adhesive and segments.

In some embodiments, extrusion dies described herein include a pair of end blocks for supporting the plurality of shims. In these embodiments, it may be convenient for one, or even all, of the shims to each have at least one through-holes for the passage of connectors between the pair of end blocks. Bolts disposed within such through-holes are one convenient approach for assembling the shims to the end blocks, although the ordinary artisan may perceive other alternatives for assembling the extrusion die. In some embodiments, the at least one end block has an inlet port for introduction of fluid material into one, or more, of the cavities.

In some embodiments, the shims will be assembled according to a plan that provides a repeating sequence of shims of diverse types. The repeating sequence can have diverse numbers of shims per repeat. For a first example, a repeating sequence comprised of five different shims is described below to create the orifice pattern shown in FIG. 5 to create the coextruded polymeric article shown in FIG. 1. When that five-shim repeating sequence is properly provided with molten polymer, it extrudes a continuous film through the die slot to create the coextruded polymeric article with segments and adhesive.

In some embodiments, the assembled shims (conveniently bolted between the end blocks) further comprise a manifold body for supporting the shims. The manifold body has at least one (e.g., in some embodiments, two three, four, or more) manifold therein, the manifold having an outlet. An expansion seal (e.g., made of copper or alloys thereof) is disposed to seal the manifold body and the shims, such that the expansion seal defines a portion of at least one of the cavities (in some embodiments, a portion of both the first and second cavities), and such that the expansion seal allows a conduit between the manifold and the cavity.

Typically, the passageway between cavity and dispensing orifice is up to 5 mm in length. Sometimes the fluid passageways leading to one array has greater fluid restriction than the fluid passageways leading to one or more of the other arrays.

The shims for dies described herein typically have thicknesses in the range from 50 micrometers to 125 micrometers, although thicknesses outside of this range may also be useful. Typically, the fluid passageways have thicknesses in a range from 50 micrometers to 750 micrometers, and lengths less than 5 mm (with generally a preference for smaller lengths for decreasingly smaller passageway thicknesses), although thicknesses and lengths outside of these ranges may also be useful. For large diameter fluid passageways, several smaller thickness shims may be stacked together, or single shims of the desired passageway width may be used.

The shims are tightly compressed to prevent gaps between the shims and polymer leakage. For example, 12 mm (0.5 inch) diameter bolts are typically used and tightened, at the extrusion temperature, to their recommended torque rating. Also, the shims are aligned to provide uniform extrusion out the extrusion orifice, as misalignment can lead to strands extruding at an angle out of the die which inhibits desired bonding of the net. To aid in alignment, an alignment key can be cut into the shims. Also, a vibrating table can be useful to provide a smooth surface alignment of the extrusion tip.

In practicing methods described herein, the polymeric materials might be solidified simply by cooling. This can be conveniently accomplished passively by ambient air, or actively, for example, by quenching the extruded first and second polymeric materials on a chilled surface (e.g., a chilled roll). In some embodiments, any of the first, second, third or fourth polymeric materials are low molecular weight polymers that need to be cross-linked to be solidified, which can be done, for example, by electromagnetic or particle radiation. In some embodiments, it is desirable to maximize the quenching time to increase the bond strength.

FIG. 5 is a schematic cross-sectional view of an exemplary die orifice pattern just upstream from the dispensing slot of the die employed in the formation of an exemplary coextruded polymeric article described herein. Orifice plan 500 shows first orifices 517, second orifices 523, third orifices 519. As will be described in detail later, the orifices are spaced apart to provide passageway sidewalls between passageways. The individual flowstreams are merged together, with demarcation lines to form a continuous coextruded polymeric article in the final slot orifice of the die, not shown. The demarcation lines are created at orifices separated by a minimal amount, by spacer shims. These shims typically have thicknesses in a range from 50 to 200 micrometers. The depth of the final slot is long enough, and the distance between the orifices are close, such that a continuous article, a created sum of all orifices, is formed within the final slot of the die.

FIG. 6 is a schematic cross-sectional view of an exemplary die orifice pattern just upstream from the dispensing slot of the die employed in the formation of an exemplary coextruded polymeric article described herein. Orifice plan 600 shows first orifices 617, second orifices 623, third orifices 619. As will be described in detail later, the orifices are spaced apart to provide passageway sidewalls between passageways. The individual flowstreams are merged together, with demarcation lines to form a continuous coextruded polymeric article in the final slot orifice of the die, not shown. The demarcation lines are created at orifices separated by a minimal amount, by spacer shims. These shims typically have thicknesses in a range from 50 to 200 micrometers. The depth of the final slot is long enough, and the distance between the orifices are close, such that a continuous article, a created sum of all orifices, is formed within the final slot of the die.

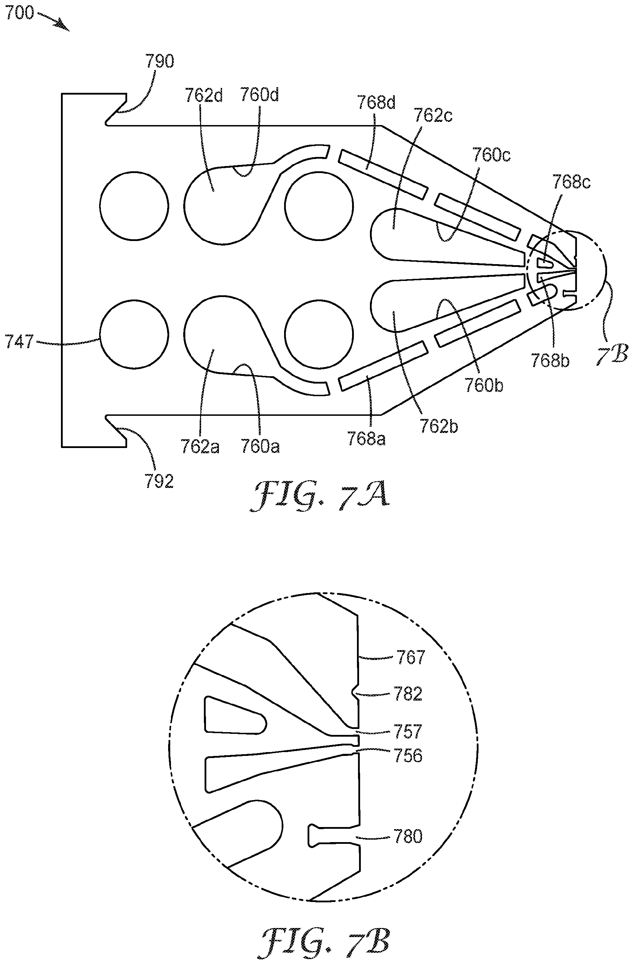

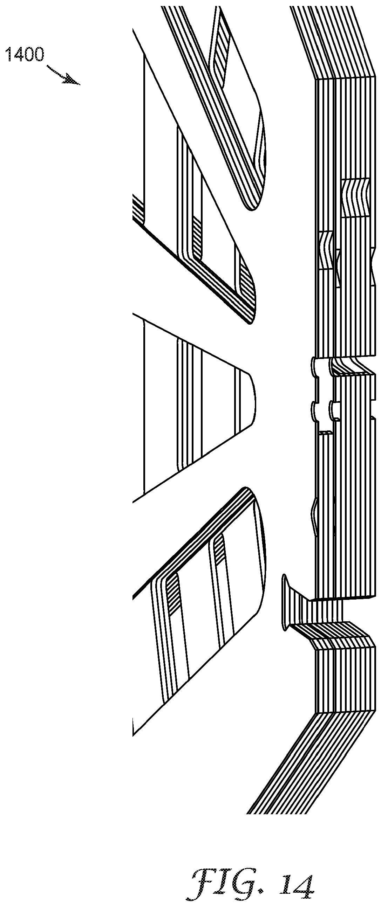

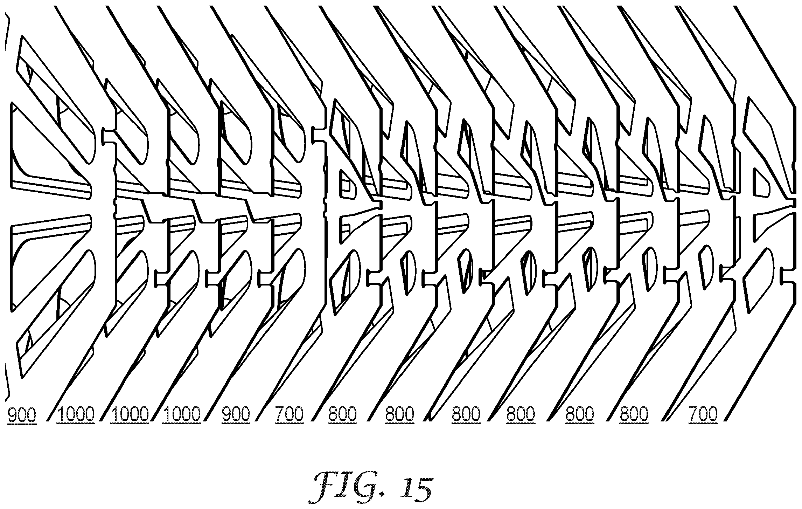

Referring now to FIGS. 7A and 7B, a plan view of shim 700 is illustrated. Shim 700 has first aperture 760a, second aperture 760b third aperture 760c, and fourth aperture 760d. When shim 700 is assembled with others as shown in FIGS. 14 and 15, aperture 760a aids in defining first cavity 762a, aperture 760b aids in defining second cavity 762b, aperture 760c aids in defining third cavity 762c, and aperture 760d aids in defining third cavity 762d. Passageways 768a, 768b, 768c, and 768d cooperate with analogous passageways on adjacent shims to allow passage from cavities 762a, 762b, 762c, and 762d to the dispensing surfaces of the appropriate shims when the shims are assembled as shown in FIGS. 14 and 15.

Shim 700 has several holes 747 to allow the passage of, for example, bolts, to hold shim 700 and others to be described below into an assembly. Shim 700 also has dispensing surface 767, and in this embodiment, dispensing surface 767 has indexing groove 780 which can receive an appropriately shaped key to ease assembling diverse shims into a die. The shim may also have identification notch 782 to help verify that the die has been assembled in the desired manner. This embodiment has shoulders 790 and 792 which can assist in mounting the assembled die with a mount of the type shown in FIG. 19. Shim 700 has dispensing opening 756 and 757, in dispensing surface 767. Dispensing opening 756 and 757 may be more clearly seen in the expanded view shown in FIG. 7B. Dispensing opening 756 has connection to cavity 762b. Dispensing opening 757 has connection to cavity 762d. It might seem that there is no path from cavity 762b to dispensing opening 756, via, for example, passageway 768b, but the flow has a route in the perpendicular- to-the-plane-of-the-drawing dimension when the sequence of shims is completely assembled. The same is true for passageway 768d. Shim 700 creates a portion of the adhesive, and also the first segment.

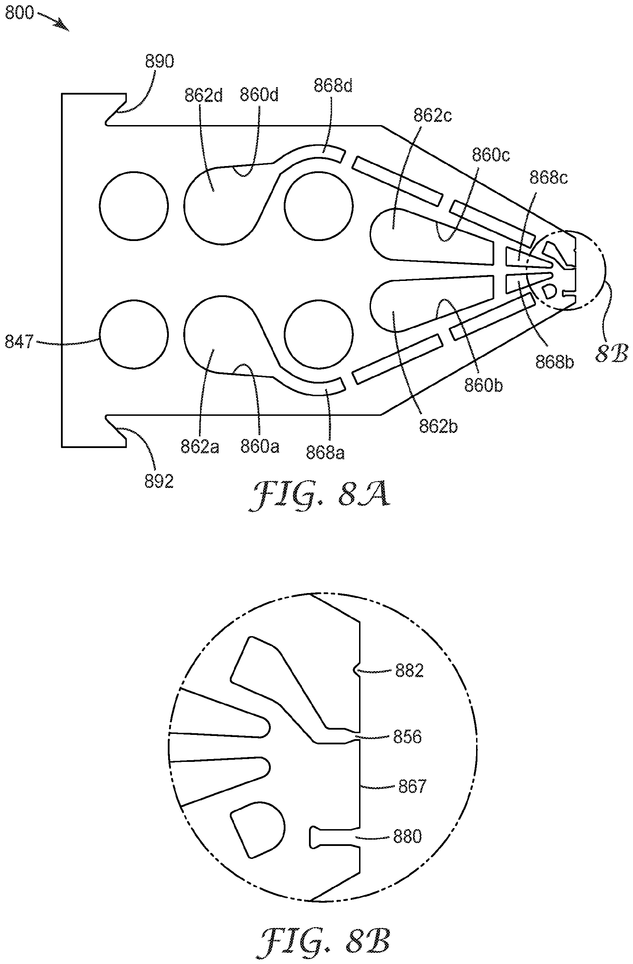

Referring to FIGS. 8A, and 8B, a plan view of shim 800 is illustrated. Shim 800 has first aperture 860a, second aperture 860b, third aperture 860c, and fourth aperture 860d. When shim 800 is assembled with others as shown in FIGS. 14 and 15, aperture 860a aids in defining first cavity 862a, aperture 860b aids in defining second cavity 862b, aperture 860c aids in defining third cavity 862c, and aperture 860d aids in defining third cavity 862d. Passageways 868a, 868b, 868c, and 868d cooperate with analogous passageways on adjacent shims to allow passage from cavities 862a, 862b, 862c, and 862d to the dispensing surfaces of the appropriate shims when the shims are assembled as shown in FIGS. 14 and 15.

Shim 800 has several holes 847 to allow the passage of, for example, bolts, to hold shim 800 and others to be described below into an assembly. Shim 800 also has dispensing surface 867, and in this embodiment, dispensing surface 867 has indexing groove 880 which can receive an appropriately shaped key to ease assembling diverse shims into a die. The shim may also have identification notch 882 to help verify that the die has been assembled in the desired manner. This embodiment has shoulders 890 and 892 which can assist in mounting the assembled die with a mount of the type shown in FIG. 19. Shim 800 has dispensing opening 856, in dispensing surface 867. Dispensing opening 856 may be more clearly seen in the expanded view shown in FIG. 8B. Dispensing opening 856 has connection to cavity 862d. It might seem that there is no path from cavity 862d to dispensing opening 856, via, for example, passageway 868d, but the flow has a route in the perpendicular- to-the-plane-of-the-drawing dimension when the sequence of shims is completely assembled. Shim 800 creates a portion of the first segment.

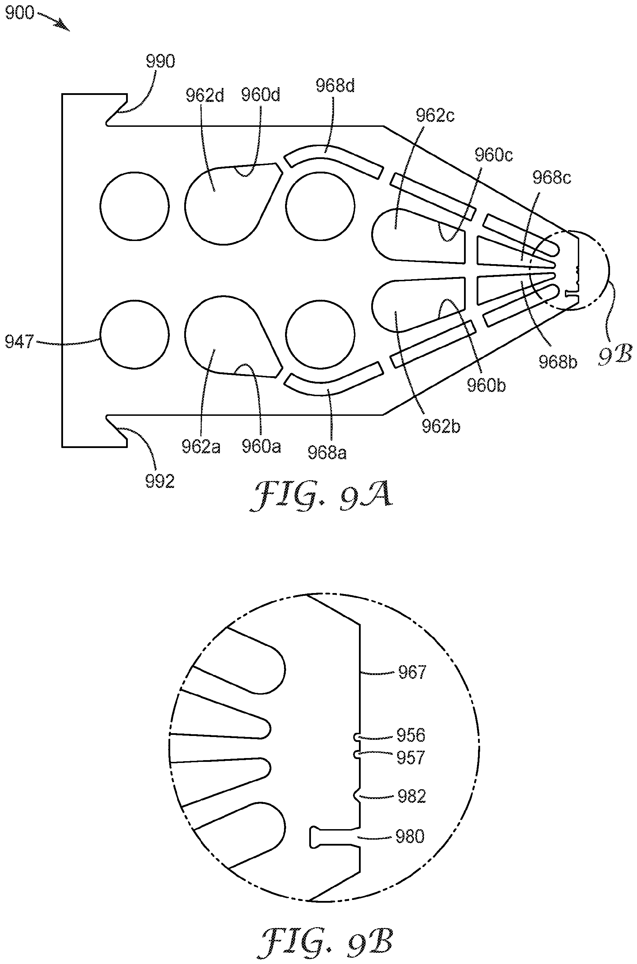

Referring to FIGS. 9A and 9B, a plan view of shim 900 is illustrated. Shim 900 has first aperture 960a, second aperture 960b, third aperture 960c, and fourth aperture 960d. When shim 900 is assembled with others as shown in FIGS. 14 and 15, aperture 560a aids in defining first cavity 962a, aperture 960b aids in defining second cavity 962b, aperture 960c aids in defining third cavity 962c, and aperture 960d aids in defining third cavity 962d. Passageways 968a, 968b, 968c, and 968d cooperate with analogous passageways on adjacent shims to allow passage from cavities 962a, 962b, 962c, and 962d to the dispensing surfaces of the appropriate shims when the shims are assembled as shown in FIGS. 14 and 15.

Shim 900 has several holes 947 to allow the passage of, for example, bolts, to hold shim 900 and others to be described below into an assembly. Shim 900 also has dispensing surface 967, and in this embodiment, dispensing surface 967 has indexing groove 980 which can receive an appropriately shaped key to ease assembling diverse shims into a die. The shim may also have identification notch 982 to help verify that the die has been assembled in the desired manner. This embodiment has shoulders 990 and 992 which can assist in mounting the assembled die with a mount of the type shown in FIG. 19. Shim 900 has dispensing opening 956 and 957, but there is no connection to cavities 962a, and 962b, 962c, or 962d. Shim 900 serves as a spacer shim, creating passageway walls. It also forms the demarcation lines between the adhesive and the second segments, and also between the first and second segments.

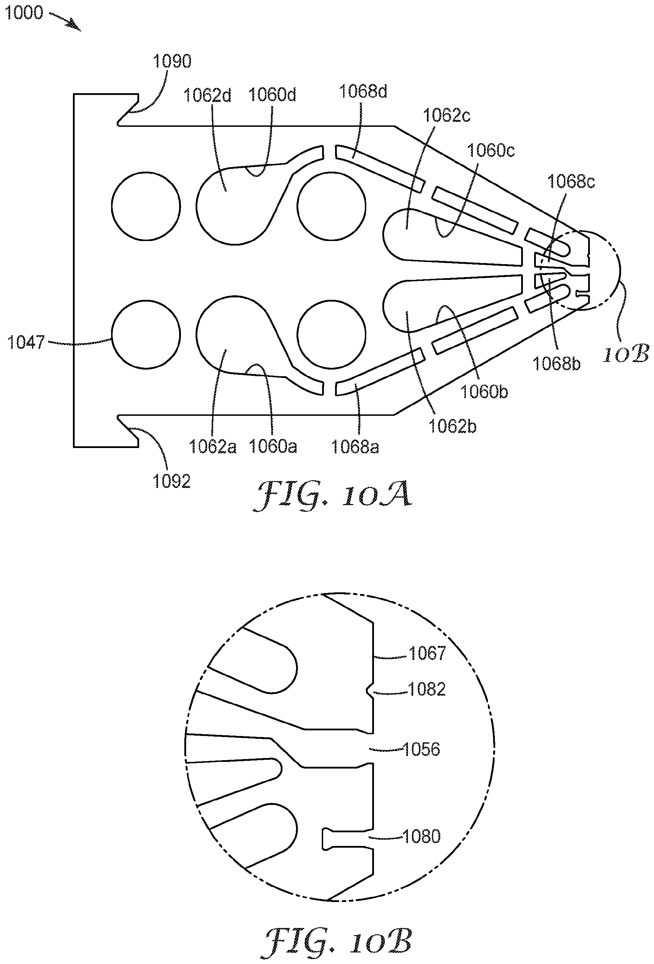

Referring to FIGS. 10A and 10B, a plan view of shim 1000 is illustrated. Shim 1000 has first aperture 1060a, second aperture 1060b, third aperture 1060c, and fourth aperture 1060d. When shim 1000 is assembled with others as shown in FIGS. 14 and 15, aperture 1060a aids in defining first cavity 1062a, aperture 1060b aids in defining second cavity 1062b, aperture 1060c aids in defining third cavity 1062c, and aperture 1060d aids in defining third cavity 1062d. Passageways 1068a, 1068b, 1068c, and 1068d cooperate with analogous passageways on adjacent shims to allow passage from cavities 1062a, 1062b, 1062c, and 1062d to the dispensing surfaces of the appropriate shims when the shims are assembled as shown in FIGS. 14 and 15.

Shim 1000 has several holes 1047 to allow the passage of, for example, bolts, to hold shim 1000 and others to be described below into an assembly. Shim 1000 also has dispensing surface 1067, and in this embodiment, dispensing surface 1067 has indexing groove 1080 which can receive an appropriately shaped key to ease assembling diverse shims into a die. The shim may also have identification notch 1082 to help verify that the die has been assembled in the desired manner. This embodiment has shoulders 1090 and 1092 which can assist in mounting the assembled die with a mount of the type shown in FIG. 19. Shim 1000 has dispensing opening 1056, in dispensing surface 1067. Shim 1000 creates the orifice for the second segment.

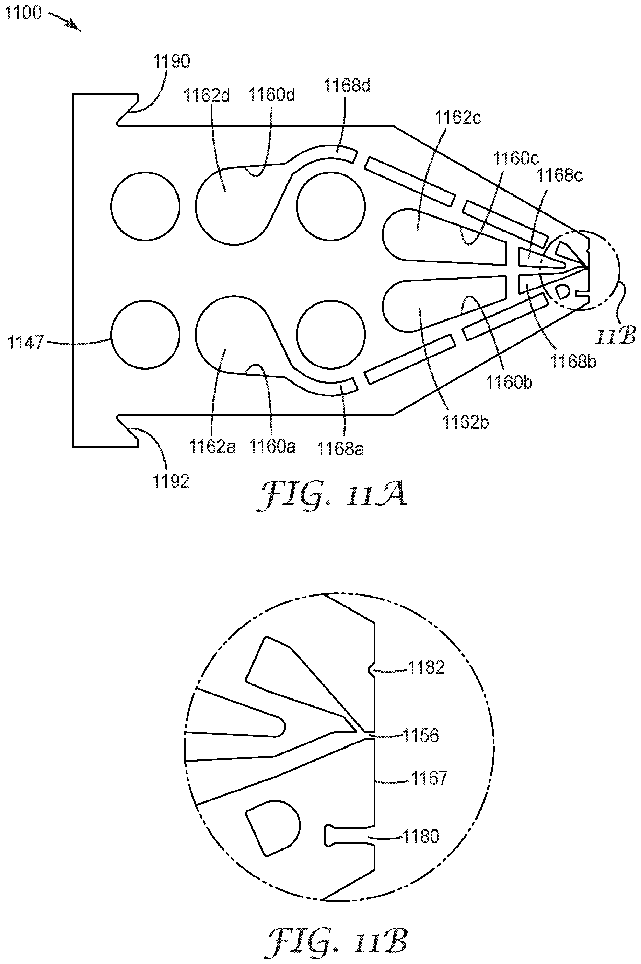

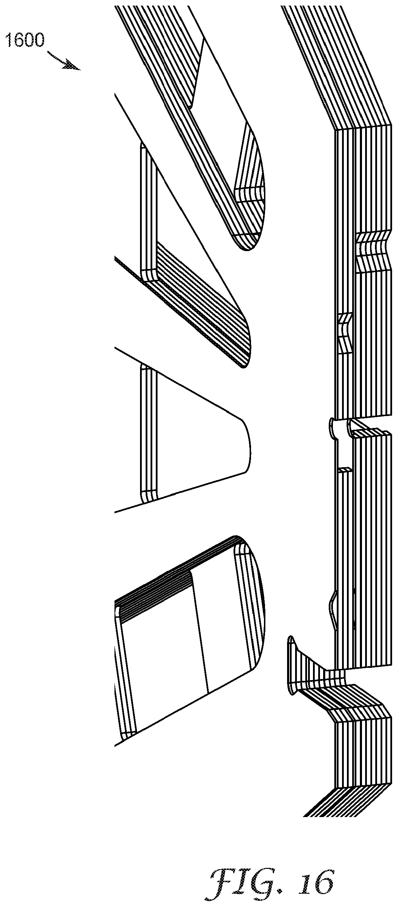

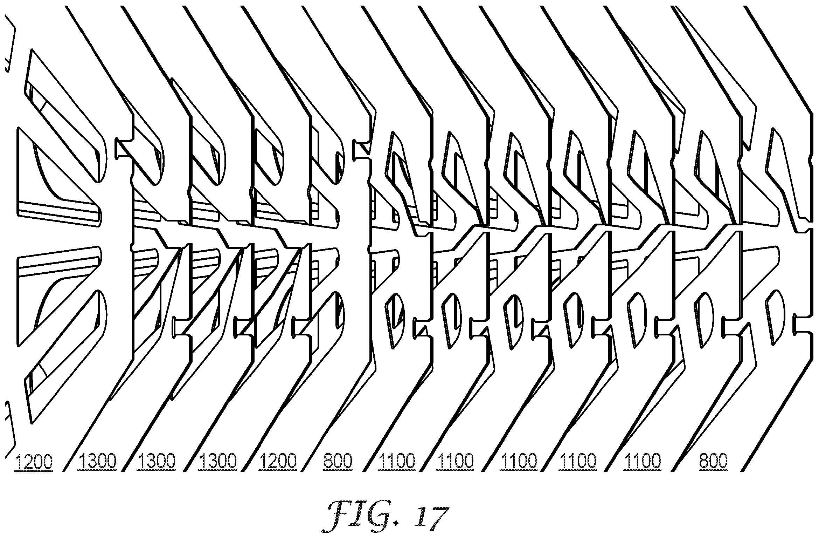

Referring to FIGS. 11A and 11B, a plan view of shim 1100 is illustrated. Shim 1100 has first aperture 1 160a, second aperture 1160b, third aperture 1160c, and fourth aperture 1160d. When shim 1100 is assembled with others as shown in FIGS. 16 and 17, aperture 1160a aids in defining first cavity 1162a, aperture 1160b aids in defining second cavity 1162b, aperture 1160c aids in defining third cavity 1162c, and aperture 1160d aids in defining third cavity 1162d. Passageways 1168a, 1168b, 1168c, and 1168d cooperate with analogous passageways on adjacent shims to allow passage from cavities 1162a, 1162b, 1162c, and 1162d to the dispensing surfaces of the appropriate shims when the shims are assembled as shown in FIGS. 16 and 17.

Shim 1100 has several holes 1147 to allow the passage of, for example, bolts, to hold shim 1100 and others to be described below into an assembly. Shim 1100 also has dispensing surface 1167, and in this embodiment, dispensing surface 1167 has indexing groove 1180 which can receive an appropriately shaped key to ease assembling diverse shims into a die. The shim may also have identification notch 1182 to help verify that the die has been assembled in the desired manner. This embodiment has shoulders 1190 and 1192 which can assist in mounting the assembled die with a mount of the type shown in FIG. 19. Shim 1100 has dispensing opening 1156, in dispensing surface 1167. Dispensing opening 1156 may be more clearly seen in the expanded view shown in FIG. 11B. Dispensing opening 1156 has connection to cavity 1162b and 1162d. Shim 1100 forms a portion of the first segment as shown in FIG 2. The passageway before the distal opening shows the passageways from cavity 1162b and 1162d merging together. This creates a portion of the first segment, with adhesive on the first side of the first segment.

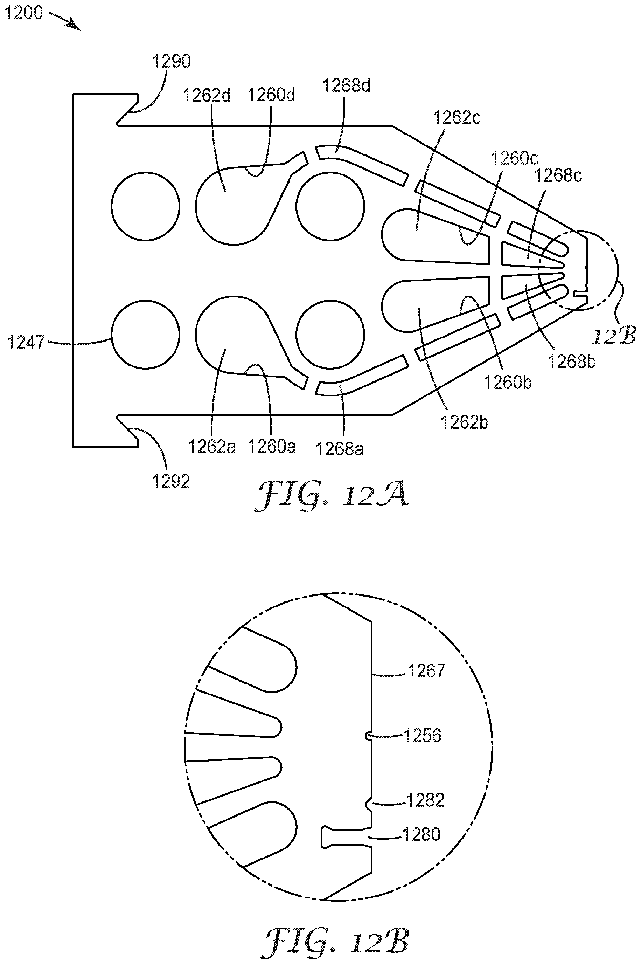

Referring to FIGS. 12A and 12B, a plan view of shim 1200 is illustrated. Shim 1200 has first aperture 1260a, second aperture 1260b, third aperture 1260c, and fourth aperture 1260d. When shim 1200 is assembled with others as shown in FIGS. 16 and 17, aperture 1260a aids in defining first cavity 1262a, aperture 1260b aids in defining second cavity 1262b, aperture 1260c aids in defining third cavity 1262c, and aperture 1260d aids in defining third cavity 1262d. Passageways 1268a, 1268b, 1268c, and 1268d cooperate with analogous passageways on adjacent shims to allow passage from cavities 1262a, 1262b, 1262c, and 1262d to the dispensing surfaces of the appropriate shims when the shims are assembled as shown in FIGS. 16 and 17.

Shim 1200 has several holes 1247 to allow the passage of, for example, bolts, to hold shim 1200 and others to be described below into an assembly. Shim 1200 also has dispensing surface 1267, and in this embodiment, dispensing surface 1267 has indexing groove 1280 which can receive an appropriately shaped key to ease assembling diverse shims into a die. The shim may also have identification notch 1282 to help verify that the die has been assembled in the desired manner. This embodiment has shoulders 1290 and 1292 which can assist in mounting the assembled die with a mount of the type shown in FIG. 19. Shim 1200 has dispensing opening 1256, but there is no connection to cavities 1262a, and 1262b, and 1262c, or 1262d. Shim 1200 serves as a spacer shim, creating passageway walls. It also forms the demarcation lines between the first and second segments.

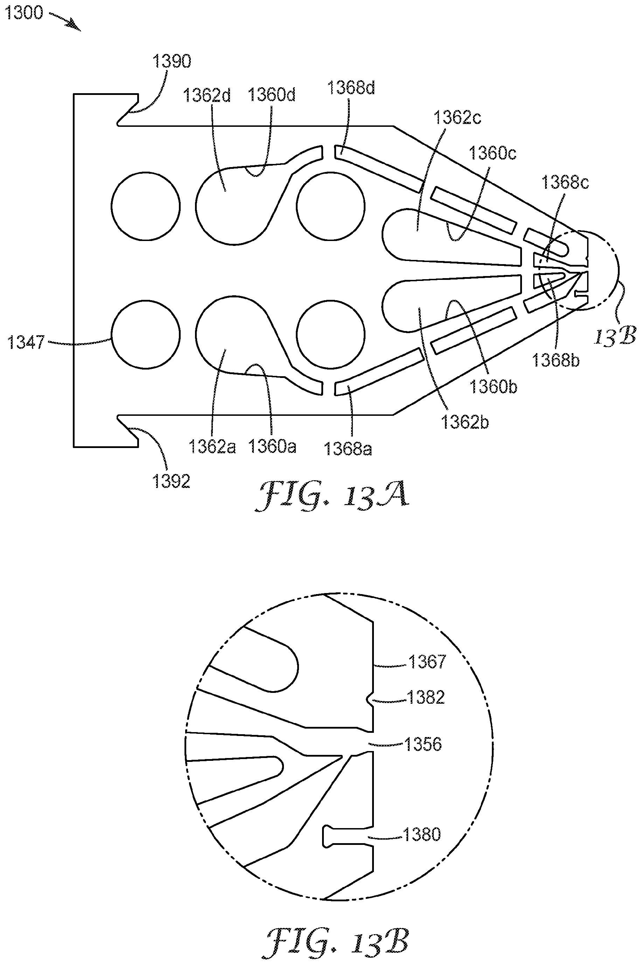

Referring to FIGS. 13A and 13B, a plan view of shim 1300 is illustrated. Shim 1300 has first aperture 1360a, second aperture 1360b, third aperture 1360c, and fourth aperture 1360d. When shim 1300 is assembled with others as shown in FIGS. 16 and 17, aperture 1360a aids in defining first cavity 1362a, aperture 1360b aids in defining second cavity 1362b, aperture 1360c aids in defining third cavity 1362c, and aperture 1360d aids in defining third cavity 1362d. Passageways 1368a, 1368b, 1368c, and 1368d cooperate with analogous passageways on adjacent shims to allow passage from cavities 1362a, 1362b, 1362c, and 1362d to the dispensing surfaces of the appropriate shims when the shims are assembled as shown in FIGS. 16 and 17.

Shim 1300 has several holes 1347 to allow the passage of, for example, bolts, to hold shim 1300 and others to be described below into an assembly. Shim 1300 also has dispensing surface 1367, and in this embodiment, dispensing surface 1367 has indexing groove 1380 which can receive an appropriately shaped key to ease assembling diverse shims into a die. The shim may also have identification notch 1382 to help verify that the die has been assembled in the desired manner. This embodiment has shoulders 1390 and 1392 which can assist in mounting the assembled die with a mount of the type shown in FIG. 19. Shim 1300 has dispensing opening 1356, in dispensing surface 1367. Dispensing opening 1356 may be more clearly seen in the expanded view shown in FIG. 13B. Dispensing opening 1356 has connection to cavity 1362a and 1362c. Shim 1300 forms a portion of the second segment as shown in FIG 2. The passageway before the distal opening shows the passageways from cavity 762b and 762c merging together. The merging of materials from two cavities can enable a two layered second segment. The second layer in the second segment is an optional feature not shown in FIG. 2 or in the Examples. This shim creates a portion of the second segment.

Referring to FIG. 14, a perspective assembly drawing of a several different repeating sequences of shims, collectively 1400, employing the shims of FIGS. 7-10 to produce coextruded polymeric article 100 shown in FIG. 1 is shown. It should be noted in FIG. 14 that the dispensing slot, formed by dispensing openings 756, 757, 856, 956, 957, and 1056 collectively in the plurality of shims, is a continuous opening across the die. This continuous opening is fed from the four extrusion orifices as shown in FIG. 5. There are no shims without dispensing openings, which may form breaks to cause the extruded polymeric compositions to form into separated strands.

Referring to FIG. 15, an exploded perspective assembly drawing of a repeating sequence of shims employing the shims of FIGS. 7-10 is illustrated. In the illustrated embodiment, the repeating sequence includes, from bottom to top as the drawing is oriented, one instance of shim 700, six instances of shim 800 which forms the first segment, one instance of shim 700, one instance of shim 900, three instances of shim 1000, and one instance of shim 900. In this view, it can be appreciated how the orifices are merged together at the extrusion slot to generate a continuous a coextruded polymeric article.

Referring to FIG. 16, a perspective assembly drawing of a several different repeating sequences of shims, collectively 1600, employing the shims of FIGS. 8, 11, 12, and 13 to produce coextruded polymeric article 200 shown in FIG. 2 is shown. It should be noted in FIG. 16 that the dispensing slot, formed by dispensing openings 856, 1156, 1256, and 1356 collectively in the plurality of shims, is a continuous opening across the die. This continuous opening is fed from the four extrusion orifices as shown in FIG. 6. There are no shims without dispensing openings, which may form breaks to cause the extruded polymeric compositions to form into separated strands.

Referring to FIG. 17, an exploded perspective assembly drawing of a repeating sequence of shims employing the shims of FIGS. 8, 11, 12, and 13 is illustrated. In the illustrated embodiment, the repeating sequence includes, from bottom to top as the drawing is oriented, one instance of shim 800, five instances of shim 1100 which forms the first orifice, one instance of shim 800, one instance of shim 1200, three instances of shim 1300, and one instance of shim 1200. In this view, it can be appreciated how the orifices are merged together at the extrusion slot to generate a continuous a coextruded polymeric article.

Referring to FIG. 18, an exploded perspective view of a mount 1800 suitable for an extrusion die composed of multiple repeats of the repeating sequence of shims of FIGS. 14 and 15 or FIGS 16 and 17 is illustrated. Mount 1800 is particularly adapted to use shims 700, 800, 900, and 1000 as shown in FIGS. 7-10, or shims 800, 1100, 1200, and 1300 in FIGS. 8, 11, 12, 13. For visual clarity, however, only a single instance of shims is shown in FIG. 18. The multiple repeats of the repeating sequence of shims are compressed between two end blocks 1844a and 1844b. Conveniently, through bolts can be used to assemble the shims to end blocks 1844a and 1844b, passing through holes 747 in shims 700 et al.

In this embodiment, inlet fittings 1850a, 1850b, 1850c, and a fourth fitting not shown provide a flow path for four streams of molten polymer through end blocks 1844a and 1844b to cavities 762a, 762b, and 762c, and 762d. Compression blocks 1804 have notch 1806 that conveniently engages the shoulders on shims (e.g., 790 and 792) on 700. When mount 1800 is completely assembled, compression blocks 1804 are attached by, for example, machine bolts to backplates 1808. Holes are conveniently provided in the assembly for the insertion of cartridge heaters 52.

Referring to FIG. 19, a perspective view of the mount 1800 of FIG. 18 is illustrated in a partially assembled state. A few shims, for example, 700 are in their assembled positions to show how they fit within mount 1800, but most of the shims that would make up an assembled die have been omitted for visual clarity.

In some embodiments, the second segments are generally parallel to each other and generally perpendicular to the first major surface of the adjacent first segments.

In some embodiments of the first and second coextruded polymeric articles described herein, each second segment has a height extending from the first major surface of the adjacent first segment to the distal end of that second segment, wherein adjacent pairs of second segments in a repeating pattern have different heights, wherein a second segment having its major surface free of adhesive is shorter (in some embodiments, at least 10, 20, 25, 30, 40, 50, 60, 70, 75, or even at least 80 percent shorter) than the second segment in the pair having the adhesive on the major surfaces of its side. In some embodiments, some of these second segments may not extend past the first side of the first segment. Second segments of dissimilar height may be extruded from the same cavity with appropriate design of the passageway and the extrusion orifice. For example, second segments which are larger can be made using a larger extrusion orifice than is used for making the smaller second segments. Further, or alternatively, for example, the flow rate of polymer to different sized orifices from the same cavity may be adjusted by the size of the passageways to each respective orifice.

In some embodiments, the second segments have a height from the first major surface of the of the adjacent segment to the distal end is in a range from 0.05 to 5 (in some embodiments, in a range from 0.1 to 5, 0.1 to 2, or even 0.1 to 1) mm.

In some embodiments, the second segments have a longest cross-sectional dimension in a range from 0.05 to 0.5 (in some embodiments, in a range from 0.05 to 0.2, or even 0.05 to 0.1) mm.

In some embodiments, the second segments have an aspect ratio (i.e., height from the first major surface of the adjacent first segment to width) of at least 2:1 (in some embodiments, at least 3:1, or even at least 4:1).

In some embodiments, the first segments are spaced apart not more than 2 mm (in some embodiments, not more than 1 mm).

In some embodiments, polymeric articles described herein have a distance between the first and second major surfaces of the first segments are in a range from 0.025 mm to 1 mm (in some embodiments, in a range from 0.025 mm to 0.5 mm, 0.025 mm to 0.2 mm, or even 0.025 mm to 0.1 mm).

In some embodiments, there are at least 2.5 (in some embodiments, at least 5, 10, 15, 20, 25, 30, 35, or even up to 40) second segments per cm.

In some embodiments, the adhesive has a thickness in a range from 0.001 to 0.1 (in some embodiments in a range from, 0.001 to 0.05, 0.001 to 0.025, or even 0.001 to 0.01) mm.

In some embodiments, polymeric materials used to make coextruded polymeric articles described herein may comprise a colorant (e.g., pigment and/or dye) for functional (e.g., optical effects) and/or aesthetic purposes (e.g., each has different color/shade). Suitable colorants are those known in the art for use in various polymeric materials. Exemplary colors imparted by the colorant include white, black, red, pink, orange, yellow, green, aqua, purple, and blue. In some embodiments, it is desirable level to have a certain degree of opacity for one or more of the polymeric materials. The amount of colorant(s) to be used in specific embodiments can be readily determined by those skilled in the (e.g., to achieve desired color, tone, opacity, transmissivity, etc.). If desired, the polymeric materials may be formulated to have the same or different colors.

Exemplary uses for coextruded polymeric articles described herein are as a household cleaning product (e.g., a mop, duster, brush, a cleaning cloth, or a lint roller) whose effectiveness is increased by the movement inherent to its use.

Another exemplary use for coextruded polymeric articles described herein is as an adhesive article that can be adhesively attached to a substrate by slight shearing motion (e.g., a wall attachment which can be positioned without any adhesion), and subsequently adhered to the wall by gentle hand pressure accompanied by a slight shearing movement. The wall attachment can be subsequently removable by peeling. Another exemplary coextruded polymeric adhesive article has two levels of adhesiveness, which can be applied to a substrate at a low level of adhesiveness, repositioned as needed, and then subsequently be made to be highly adhesive by applying gentle hand pressure accompanied by a slight shearing movement. Yet another exemplary coextruded polymeric adhesive article has three levels of adhesiveness and two-sided adhesiveness. Such coextruded polymeric articles can behave as any described above, and then, on the still exposed surface (the surface opposing the surface already adhered to a substrate) can exhibit adhesiveness with respect to an additional substrate or article. For example, the coextruded polymeric article can be positioned against a wall, repositioned freely in a state of no or little adhesiveness. A gentle hand pressure can be applied accompanied with a slight shearing movement to provide a high level of adhesiveness. Then use of a third level of adhesiveness existing on the side of the coextruded polymeric adhesive article opposite the side adhered to the wall (which may be the same or different from either of the first two levels of adhesiveness) can be made to affix other objects to the wall such as posters, handbills, and other decorative materials, either permanently or removably, either once or repeatedly.

In some embodiments, a coextruded article described herein has a first set of second segments at least partial filling the gaps in a second set of second segments, wherein the second segments of the first set at least partial fill the gaps of the second segments of the second set.

Another exemplary use for coextruded polymeric articles described herein is to make an article comprising two coextruded polymeric articles described herein, wherein the second segments of one coextruded polymeric articles at least partial fill the gaps of the other coextruded polymeric article, and wherein the second segments of the other coextruded polymeric articles at least partial fill the gaps of the one coextruded polymeric article. For example, the first and second coextruded articles can be used to attach a battery to an electronic device (e.g., a cell phone, a tablet, or laptop computer). In some embodiment such as that shown, for example, in FIG. 3, a self-mating article may have the adhesive perform in shear mode as the articles are disengaged in peel mode.

The adjustment of the gap can affect the force and alignment required to engage the article upon itself or two articles together. For example, smaller gaps typically need relatively precise alignment for engagement, whereas large gaps tend to need less precise alignment to engage. A minimal gap can be advantageous for linear fasteners. Engagement of articles such as shown in FIG. 4, where the adhesive is located on the surface of the first segment, enable minimal gap constructions as adhesive pairs are not needed to pass past each other. Articles for engagement shown in FIG. 3, for example, where the adhesive is at the major surface of the second segment typically need a larger gap to prevent adhesive bonding before complete engagement. The disengagement force of these fasteners can be increased with minimal gap constructions, which enable more engagements per unit distance. Disengagement of an article such as shown in FIG. 4 can be adjusted, for example, by the adhesive performance (e.g., quick stick and peel performance). Disengagement can also be adjusted by the distal end material and contact area. Articles such as shown in FIG. 3, for example, can exhibit shear force disengagement when the structures are peeled apart. Use of high shear performance adhesives can provide high bond strength, even permanent bond strength where the adhesive bond is greater than the mechanical strength of the segments. The segment heights from the first segment, and also the segments per cross section distance can affect disengagement performance.

It is also within the scope of the present disclosure that properties in addition to adhesiveness can be triggered to exhibit tiered behavior in embodiments of coextruded polymeric articles described herein. For example, various chemical properties can also be utilized to provide channeling webs or tapes. An exemplary coextruded polymeric article could have hydrophobic projections and hydrophilic protrusions. Water, for instance, gently encountering such a coextruded polymeric article from the side having the projections would bead-up on the coextruded polymeric article, unless it approached with a determinate level of force or pressure, whereupon it would penetrate between projections deeply enough to encounter hydrophilic protrusions, and would be wicked down-channel due to hydrostatic forces, while still unable to penetrate through the layer to any appreciable extent.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1

A co-extrusion die as generally depicted in FIG. 19 and assembled with a multi shim repeating pattern of extrusion orifices as generally illustrated in FIG. 14, was prepared. The thickness of the shims in the repeat sequence was 4 mils (0.102 mm) for shims 700, 800, and 1000. The thickness of the shims in the repeat sequence was 2 mils (0.051 mm) for shims 900. These shims were formed from stainless steel, with perforations cut by a wire electron discharge machining. The shims were stacked in a repeating sequence 700, 800, 800, 800, 800, 800, 800, 700, 900, 1000, 1000, 1000, 900. This configuration created a repeating length of 48 mils (1.22 mm) with cavities, passageways and orifices such that the first extruder feeds the orifices for the first segment, the second extruder feeds the orifices for the second segments, and the third extruder feeds the orifices for the adhesive. The shims were assembled to create a die at about 8 cm in width. The extrusion orifices were aligned in a collinear, alternating arrangement, and resulting dispensing surface was as shown in FIG 5.

The inlet fittings on the two end blocks were each connected to three conventional extruders. The extruder feeding the cavity for the first segment of the die was loaded with polyethylene (obtained under the trade designation "ELITE 5815" from Dow Chemical, Midland, MI) dry blended with a polypropylene color concentrate at 2% (obtained under the trade designation "PP 54643779" from Clariant, Minneapolis, MN). The extruder feeding the cavity for the second segment of the die was loaded with polyethylene (obtained under the trade designation "ELITE 5230" from Dow Chemical) dry blended with a polypropylene color concentrate at 2% ("PP 54643779"). A twin screw was used to feed the adhesive. A styrene block copolymer, (obtained under the trade designation "KRATON 1340" from Kraton Polymers, Belpre, TX) was blended with a hydrocarbon tackifier (obtained under the trade designation "SUKOREZ 210" from Kolon Industries, Korea) and then pumped to the die with a melt pump. The adhesive formulation was 6 parts block copolymer and 4 parts tackifier.

The melt was extruded vertically into an extrusion quench takeaway. The quench roll was a smooth temperature controlled chrome plated 20 cm diameter steel roll. The quench nip temperature was controlled with internal water flow. The web path wrapped 180 degrees around the chrome steel roll and then to a windup roll. Under these conditions a polymeric layer generally as depicted in FIG. 1 was extruded.

Other process conditions are listed below:

| | |
|---|---|
| Flow rate for the first segment | 0.9 kg/hr. |
| Flow rate for the second segment | 0.7 kg/hr. |
| Flow rate for the adhesive | 0.45 kg/hr. |
| Extrusion temperature | 215°C |
| Quench roll temperature | 10°C |
| Quench takeaway speed | 3.0 m/min. |

An optical microscope was used to measure web dimensions:

| | |
|---|---|
| Repeat Length: | 1.22 mm |
| Segment 1 thickness: | 0.12 mm |
| Adhesive thickness: | 0.10 mm |
| Adhesive height: | 0.3 mm |
| Rib Height: | 0.67 mm |
| Rib Width: | 0.15 mm |

### Example 2

A co-extrusion die as generally depicted in FIG. 19 and assembled with a multi shim repeating pattern of extrusion orifices as generally illustrated in the table and figures, was prepared. The thickness of the shims in the repeat sequence was 4 mils (0.102 mm) for shims 1100, 800, and 1300. The thickness of the shims in the repeat sequence was 2 mils (0.051 mm) for shims 1200. These shims were formed from stainless steel, with perforations cut by a wire electron discharge machining. The shims were stacked in a repeating sequence 800, 1100, 1100, 1100, 1100, 1100, 800, 1200, 1300, 1300, 1300, 1200. This configuration created a repeating length of 44 mils (1.12 mm) with cavities, passageways and orifices such that the first extruder feeds the orifices for the first segments, the second extruder feeds the orifices for the second segments, and the third extruder feeds the orifices for the first side of the first segment. The shims were assembled to create a die at about 8 cm in width. The extrusion orifices were aligned in a collinear, alternating arrangement, and resulting dispensing surface was as shown in FIG 6.

The inlet fittings on the two end blocks were each connected to three conventional extruders. The extruder feeding the cavities for the first and second segments of the die were loaded with polyethylene ("ELITE 5815"). A twin screw and melt pump was used to feed the adhesive. A styrene block copolymer ("KRATON 1340") was blended with a hydrocarbon tackifier ("SUKOREZ 210") and then pumped to the die with a melt pump. The adhesive formulation was 6 parts block copolymer and 4 parts tackifier.

The melt was extruded vertically into an extrusion quench takeaway. The quench roll was a smooth temperature controlled chrome plated 20 cm diameter steel roll. The quench nip temperature was controlled with internal water flow. The web path wrapped 180 degrees around the chrome steel roll and then to a windup roll. Under these conditions a polymeric layer generally as depicted in FIG. 2 was extruded.

Other process conditions are listed below:

| | |
|---|---|
| Flow rate for the first segment | 1.1 kg/hr. |
| Flow rate for the second segment | 1.1 kg/hr. |
| Flow rate for the adhesive | 0.75 kg/hr. |
| Extrusion temperature | 204°C |
| Quench roll temperature | 10°C |
| Quench takeaway speed | 1.5 m/min. |
| Film basis weight | 222 g/m² |

An optical microscope was used to measure web dimensions:

| | |
|---|---|
| Repeat Length: | 0.82 mm |
| Segment 1 thickness: | 0.13 mm |
| Adhesive thickness: | 0.04 mm |
| Rib 1 Height: | 0.32 mm |
| Rib 1 Width: | 0.14 mm |

Foreseeable modifications and alterations of this disclosure will be apparent to those skilled in the art without departing from the scope of this invention. This invention is defined by the scope of the claims and should not be restricted to the embodiments that are set forth in this application for illustrative purposes.

## Claims

1. A coextruded polymeric article (100) comprising:
first segments (111) each having first (101) and second (102) opposed major surfaces and a thickness (t₁), the first segments comprising first material; and
second segments (112) comprising second material, wherein adjacent first segments are joined together via a second segment, wherein at least 10 percent by number of the second segments extend from the second major surface past the first major surface of each first adjacent segment and have Z a distal end (150), the second segments having first (103) and second (104) opposed major surfaces, wherein there is a gap (160) between adjacent second segments; the article being **characterised in that** it further comprises
adhesive (134, 135) on the first and second major surfaces of at least every other second segment except a portion (171, 172) of the major surface adjacent to the respective distal end is free of the adhesive, wherein the first segments, second segments, and adhesive each extend continuously for at least 5 millimeters.

2. The coextruded polymeric article of claim 1, wherein the adhesive is on the first and second major surfaces of each second segment except a portion of the major surface adjacent to the respective distal end is free of the adhesive.

3. The coextruded polymeric article of any preceding claim, wherein the adhesive is also on the first major surface of the first segment between second segments.

4. The coextruded polymeric article of any of claims 1 to 3, wherein a portion of the first major surface of the first segment between second segments is free of adhesive.

5. The coextruded polymeric article of any preceding claim, wherein there is at least one of a demarcation line between the first and second segments or a demarcation line between the adhesive and the second segments.

6. The coextruded polymeric article of any preceding claim, wherein each second segment has a height extending from the first major surface of the adjacent first segment to the distal end of that second segment, wherein adjacent pairs of second segments in a repeating pattern have different heights, wherein a second segment having its major surface free of adhesive is shorter than the second segment in the pair having the adhesive on the major surfaces of its side; and/or wherein the second segments have an aspect ratio of at least 2:1, said aspect ratio being the ratio of height from the first major surface of the adjacent first segment to width.

7. An article comprising first and second coextruded polymeric articles of any preceding claim, wherein the second segments of the first coextruded polymeric articles at least partial fill the gaps of the second coextruded polymeric articles, and wherein the second segments of the second coextruded polymeric articles at least partial fill the gaps of the first coextruded polymeric articles.

8. The article of claim 7, wherein the first coextruded polymeric article has a major surface opposed to the gaps of the first coextruded polymeric article attached to a first substrate, and wherein the second coextruded polymeric article has a major surface oppose to the gaps of the second coextruded polymeric article attached to a second substrate.

9. A method of making a coextruded polymeric article of any of claims 1 to 6, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, a third plurality of a repeating sequence of shims that together provide a fluid passageway between the first cavity and a first orifice and also together provide a fluid passageway between the third cavity and a third orifice, and a fourth plurality of a repeating sequence of shims that together provide a fluid passageway between the first cavity and a first orifice;
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

10. A coextruded polymeric article comprising:
first segments each having first and second opposed major surfaces and a thickness, the first segments comprising first material;
second segments comprising second material, wherein adjacent first segments are joined together via a second segment, wherein at least 10 percent by number of the second segments extend from the second major surface past the first major surface of each first adjacent segment and has a distal end, the second segments having first and second opposed major surfaces, wherein there is a gap between adjacent second segments; and
adhesive on the first major surface of the first segments,
wherein the first segments, second segments and adhesive each extend continuously for at least 5 millimeters.

11. The coextruded polymeric article of claim 10, wherein each second segment has a height extending from the first major surface of the adjacent first segment to the distal end of that second segment, wherein adjacent pairs of second segments in a repeating pattern have different heights, wherein a second segment having its major surface free of adhesive is shorter than the second segment in the pair having adhesive on the major surfaces of its side; and/or wherein the second segments have an aspect ratio of at least 2:1, said aspect ratio being the ratio of height from the first major surface of the adjacent first segment to width.

12. The coextruded polymeric article of either claim 10 or 11, wherein there is at least one of a demarcation line between the first and second segments or a demarcation line between the adhesive and first segments.

13. An article comprising first and second coextruded polymeric articles of any of claims 10 to 12 wherein the second segments of the first coextruded polymeric articles at least partial fill the gaps of the second coextruded polymeric articles, and wherein the second segments of the second coextruded polymeric articles at least partial fill the gaps of the first coextruded polymeric articles.

14. The article of claim 13, wherein the first coextruded polymeric article has a major surface opposed to the gaps of the first coextruded polymeric article attached to a first substrate, and wherein the second coextruded polymeric article has a major surface opposed to the gaps of the second coextruded polymeric article attached to a second substrate.

15. A method of making a coextruded polymeric article of claims 10 to 12, the method comprising:
providing an extrusion die comprising a plurality of shims positioned adjacent to one another, the shims together defining a first cavity, a second cavity, a third cavity, and a die slot, wherein the die slot has a distal opening, wherein the die slot is comprised of a first plurality of orifices, a second plurality of orifices, and a third plurality of orifices, wherein the plurality of shims comprises a first plurality of a repeating sequence of shims that together provide a fluid passageway between the first cavity and a first orifice and also together provide a fluid passageway between the third cavity and the third orifice, a second plurality of a repeating sequence of shims that together provide a fluid passageway between the second cavity and a second orifice, wherein the second orifice is collinear with the first orifice, wherein the second orifice extends from the first side of the first orifice to a distance past the second side of the first orifice,
providing via extrusion a first material to the first cavity of the extrusion die, a second material to the second cavity of the extrusion die, and a third material to the third cavity of the extrusion die, wherein the first and third or second and third materials are different;
extruding a layer from the distal opening of the die slot; and
quenching the extruded layer.

## Patentansprüche

1. Ein coextrudierter Polymergegenstand (100), umfassend:
erste Segmente (111), die jeweils eine erste (101) und eine zweite (102) gegenüberliegende Hauptoberfläch und eine Dicke (t₁) aufweisen, die ersten Segmente umfassend erstes Material; und
zweite Segmente (112), umfassend zweites Material, wobei angrenzende erste Segmente mittels eines zweiten Segments miteinander verbunden sind, wobei sich mindestens 10 Prozent der Anzahl der zweiten Segmente von der zweiten Hauptoberfläche über die erste Hauptoberfläche jedes ersten angrenzenden Segments hinaus erstrecken und ein distales Ende (150) aufweisen, wobei die zweiten Segmente eine erste (103) und eine zweite (104) gegenüberliegende Hauptoberfläche aufweisen, wobei ein Spalt (160) zwischen angrenzenden zweiten Segmenten vorhanden ist; der Gegenstand **dadurch gekennzeichnet ist, dass** er ferner Kleber (134, 135) auf der ersten und der zweiten Hauptoberfläche mindestens jedes zweiten Segments umfasst, mit Ausnahme eines Abschnitts (171, 172) der Hauptoberfläche, der an das jeweilige distale Ende angrenzt, der frei von dem Kleber ist, wobei sich die ersten Segmente, die zweiten Segmente und der Kleber jeweils kontinuierlich über mindestens 5 Millimeter erstrecken.

2. Der coextrudierte Polymergegenstand nach Anspruch 1, wobei sich der Kleber auf der ersten und der zweiten Hauptoberfläche jedes zweiten Segments befindet, mit Ausnahme eines Abschnitts der Hauptoberfläche, der an das jeweilige distale Ende angrenzt, der frei von dem Kleber ist.

3. Der coextrudierte Polymergegenstand nach einem der vorstehenden Ansprüche, wobei sich der Kleber auch auf der ersten Hauptoberfläche des ersten Segments zwischen zweiten Segmenten befindet.

4. Der coextrudierte Polymergegenstand nach einem der Ansprüche 1 bis 3, wobei ein Abschnitt der ersten Hauptoberfläche des ersten Segments zwischen zweiten Segmenten frei von Kleber ist.

5. Der coextrudierte Polymergegenstand nach einem der vorstehenden Ansprüche, wobei es mindestens eine von einer Grenzlinie zwischen den ersten und den zweiten Segmenten oder eine Grenzlinie zwischen dem Kleber und den zweiten Segmenten gibt.

6. Der coextrudierte Polymergegenstand nach einem der vorstehenden Ansprüche, wobei jedes zweite Segment eine Höhe aufweist, die sich von der ersten Hauptoberfläche des angrenzenden ersten Segments zu dem distalen Ende dieses zweiten Segments erstreckt, wobei angrenzende Paare von zweiten Segmenten in einem sich wiederholenden Muster unterschiedliche Höhen aufweisen, wobei ein zweites Segment, das seine Hauptoberfläche frei von Kleber aufweist, kürzer als das zweite Segment in dem Paar ist, das den Kleber auf den Hauptoberflächen seiner Seite aufweist; und/oder wobei die zweiten Segmente ein Seitenverhältnis von mindestens 2:1 aufweisen, wobei das Seitenverhältnis das Verhältnis von Höhe von der ersten Hauptoberfläche des angrenzenden ersten Segments zu Breite ist.

7. Ein Gegenstand, umfassend erste und zweite coextrudierte Polymergegenstände nach einem der vorstehenden Ansprüche, wobei die zweiten Segmente der ersten coextrudierten Polymergegenstände die Spalten der zweiten coextrudierten Polymergegenstände mindestens teilweise füllen, und wobei die zweiten Segmente der zweiten coextrudierten Polymergegenstände die Spalten der ersten coextrudierten Polymergegenstände mindestens teilweise füllen.

8. Der Gegenstand nach Anspruch 7, wobei der erste coextrudierte Polymergegenstand eine Hauptoberfläche aufweist, die den Spalten des ersten coextrudierten Polymergegenstands gegenüberliegt, der an einem ersten Substrat befestigt ist, und wobei der zweite coextrudierte Polymergegenstand eine Hauptoberfläche aufweist, die den Spalten des zweiten coextrudierten Polymergegenstands gegenüberliegt, der an einem zweiten Substrat befestigt ist.

9. Ein Verfahren zum Herstellen eines coextrudierten Polymergegenstands nach einem der Ansprüche 1 bis 6, das Verfahren umfassend:
Bereitstellen einer Extrusionsdüse, die eine Vielzahl von aneinander angrenzend angeordneten Ausgleichsscheiben umfasst, wobei die Ausgleichsscheiben zusammen einen ersten Hohlraum, einen zweiten Hohlraum, einen dritten Hohlraum und einen Düsenschlitz definieren, wobei der Düsenschlitz eine distale Öffnung aufweist, wobei der Düsenschlitz aus einer ersten Vielzahl von Öffnungen, einer zweiten Vielzahl von Öffnungen und einer dritten Vielzahl von Öffnungen besteht, wobei die Vielzahl von Ausgleichsscheiben eine erste Vielzahl einer sich wiederholenden Sequenz von Ausgleichsscheiben umfasst, die zusammen einen Fluiddurchgang zwischen dem ersten Hohlraum und einer ersten Öffnung bereitstellen und auch zusammen einen Fluiddurchgang zwischen dem dritten Hohlraum und der dritten Öffnung bereitstellen, eine zweite Vielzahl einer sich wiederholenden Sequenz von Ausgleichsscheiben, die zusammen einen Fluiddurchgang zwischen dem zweiten Hohlraum und einer zweiten Öffnung bereitstellen, eine dritte Vielzahl einer sich wiederholenden Sequenz von Ausgleichsscheiben, die zusammen einen Fluiddurchgang zwischen dem ersten Hohlraum und einer ersten Öffnung bereitstellen und auch zusammen einen Fluiddurchgang zwischen dem dritten Hohlraum und einer dritten Öffnung bereitstellen, und eine vierte Vielzahl einer sich wiederholenden Sequenz von Ausgleichsscheiben, die zusammen einen Fluiddurchgang zwischen dem ersten Hohlraum und einer ersten Öffnung bereitstellen;
Bereitstellen, mittels Extrusion, eines ersten Materials für den ersten Hohlraum der Extrusionsdüse, eines zweiten Materials für den zweiten Hohlraum der Extrusionsdüse und eines dritten Materials für den dritten Hohlraum der Extrusionsdüse, wobei das erste und das dritte oder das zweite und das dritte Material unterschiedlich sind;
Extrudieren einer Schicht aus der distalen Öffnung des Düsenschlitzes; und
Abschrecken der extrudierten Schicht.

10. Ein coextrudierter Polymergegenstand, umfassend:
erste Segmente, die jeweils eine erste und eine zweite gegenüberliegende Hauptoberfläche und eine Dicke aufweisen, die ersten Segmente umfassend erstes Material;
zweite Segmente, umfassend ein zweites Material, wobei angrenzend erste Segmente mittels eines zweiten Segments miteinander verbunden sind, wobei sich mindestens 10 Prozent der Anzahl der zweiten Segmente von der zweiten Hauptoberfläche über die erste Hauptoberfläche jedes ersten angrenzenden Segments hinaus erstrecken und ein distales Ende aufweisen, wobei die zweiten Segmente die erste und die zweite gegenüberliegende Hauptoberfläche aufweisen, wobei ein Spalt zwischen angrenzenden zweiten Segmenten vorhanden ist; und
Kleber auf der ersten Hauptoberfläche der ersten Segmente,
wobei sich die ersten Segmente, die zweiten Segmente und der Kleber jeweils kontinuierlich für mindestens 5 Millimeter erstrecken.

11. Der coextrudierte Polymergegenstand nach Anspruch 10, wobei jedes zweite Segment eine Höhe aufweist, die sich von der ersten Hauptoberfläche des angrenzenden ersten Segments zu dem distalen Ende dieses zweiten Segments erstreckt, wobei angrenzende Paare von zweiten Segmenten in einem sich wiederholenden Muster unterschiedliche Höhen aufweisen, wobei ein zweites Segment, das seine Hauptoberfläche frei von Kleber aufweist, kürzer als das zweite Segment in dem Paar ist, das den Kleber auf den Hauptoberflächen seiner Seite aufweist; und/oder wobei die zweiten Segmente ein Seitenverhältnis von mindestens 2:1 aufweisen, wobei das Seitenverhältnis das Verhältnis von Höhe von der ersten Hauptoberfläche des angrenzenden ersten Segments zu Breite ist.

12. Der coextrudierte Polymergegenstand nach Anspruch 10 oder 11, wobei es mindestens eine von einer Grenzlinie zwischen den ersten und den zweiten Segmenten oder eine Grenzlinie zwischen dem Kleber und den ersten Segmenten gibt.

13. Ein Gegenstand, umfassend erste und zweite coextrudierte Polymergegenstände nach einem der Ansprüche 10 bis 12, wobei die zweiten Segmente der ersten coextrudierten Polymergegenstände die Spalte der zweiten coextrudierten Polymergegenstände mindestens teilweise füllen, und wobei die zweiten Segmente der zweiten coextrudierten Polymergegenstände die Spalte der ersten coextrudierten Polymergegenstände mindestens teilweise füllen.

14. Der Gegenstand nach Anspruch 13, wobei der erste coextrudierte Polymergegenstand eine Hauptoberfläche aufweist, die den Spalten des ersten coextrudierten Polymergegenstands gegenüberliegt, der an einem ersten Substrat befestigt ist, und wobei der zweite coextrudierte Polymergegenstand eine Hauptoberfläche aufweist, die den Spalten des zweiten coextrudierten Polymergegenstands gegenüberliegt, der an einem zweiten Substrat befestigt ist.

15. Ein Verfahren zum Herstellen eines coextrudierten Polymergegenstands nach einem der Ansprüche 10 bis 12, das Verfahren umfassend:
Bereitstellen einer Extrusionsdüse, die eine Vielzahl von aneinander angrenzend angeordneten Ausgleichsscheiben umfasst, wobei die Ausgleichsscheiben zusammen einen ersten Hohlraum, einen zweiten Hohlraum, einen dritten Hohlraum und einen Düsenschlitz definieren, wobei der Düsenschlitz eine distale Öffnung aufweist, wobei der Düsenschlitz aus einer ersten Vielzahl von Öffnungen, einer zweiten Vielzahl von Öffnungen und einer dritten Vielzahl von Öffnungen besteht, wobei die Vielzahl von Ausgleichsscheiben eine erste Vielzahl einer sich wiederholenden Sequenz von Ausgleichsscheiben umfasst, die zusammen einen Fluiddurchgang zwischen dem ersten Hohlraum und einer ersten Öffnung bereitstellen und auch zusammen einen Fluiddurchgang zwischen dem dritten Hohlraum und einer dritten Öffnung bereitstellen, eine zweite Vielzahl einer sich wiederholenden Sequenz von Ausgleichsscheiben, die zusammen einen Fluiddurchgang zwischen dem zweiten Hohlraum und einer zweiten Öffnung bereitstellen, wobei die zweite Öffnung kollinear mit der ersten Öffnung ist, wobei sich die zweite Öffnung von der ersten Seite der ersten Öffnung bis zu einer Distanz hinter der zweiten Seite der ersten Öffnung erstreckt,
Bereitstellen, mittels Extrusion, eines ersten Materials für den ersten Hohlraum der Extrusionsdüse, eines zweiten Materials für den zweiten Hohlraum der Extrusionsdüse und eines dritten Materials für den dritten Hohlraum der Extrusionsdüse, wobei das erste und das dritte oder das zweite und das dritte Material unterschiedlich sind;
Extrudieren einer Schicht aus der distalen Öffnung des Düsenschlitzes; und
Abschrecken der extrudierten Schicht.

## Revendications

1. Article polymère coextrudé (100) comprenant :
des premiers segments (111) ayant chacun des première (101) et seconde (102) surfaces principales opposées et une épaisseur (t₁), les premiers segments comprenant un premier matériau ; et
des seconds segments (112) comprenant un deuxième matériau, dans lequel des premiers segments adjacents sont réunis par l'intermédiaire d'un second segment, dans lequel au moins 10 pour cent en nombre des seconds segments s'étendent à partir de la seconde surface principale au-delà de la première surface principale de chaque premier segment adjacent et a une extrémité distale (150), les seconds segments ayant des première (103) et seconde (104) surfaces principales opposées, dans lequel il y a un écartement (160) entre des seconds segments adjacents ; l'article étant **caractérisé en ce qu'**il comprend en outre un adhésif (134, 135) sur les première et seconde surfaces principales d'au moins chaque autre second segment à l'exception d'une partie (171, 172) de la surface principale adjacente à l'extrémité distale respective qui est dépourvue de l'adhésif, dans lequel les premiers segments, les seconds segments, et l'adhésif s'étendent chacun de manière continue sur au moins 5 millimètres.

2. Article polymère coextrudé selon la revendication 1, dans lequel l'adhésif est sur les première et seconde surfaces principales de chaque second segment à l'exception d'une partie de la surface principale adjacente à l'extrémité distale respective qui est dépourvue de l'adhésif.

3. Article polymère coextrudé selon l'une quelconque revendication précédente, dans lequel l'adhésif est également sur la première surface principale du premier segment entre des seconds segments.

4. Article polymère coextrudé selon l'une quelconque des revendications 1 à 3, dans lequel une partie de la première surface principale du premier segment entre des seconds segments est dépourvue d'adhésif.

5. Article polymère coextrudé selon l'une quelconque revendication précédente, dans lequel il y a au moins l'une parmi une ligne de démarcation entre les premier et second segments ou une ligne de démarcation entre l'adhésif et les seconds segments.

6. Article polymère coextrudé selon l'une quelconque revendication précédente, dans lequel chaque second segment a une hauteur s'étendant de la première surface principale du premier segment adjacent à l'extrémité distale de ce second segment, dans lequel des paires adjacentes de seconds segments dans un motif répétitif ont des hauteurs différentes, dans lequel un second segment ayant sa surface principale dépourvue d'adhésif est plus court que le second segment dans la paire ayant l'adhésif sur les surfaces principales de son côté ; et/ou dans lequel les seconds segments ont un rapport d'aspect d'au moins 2:1, ledit rapport d'aspect étant le rapport entre la hauteur de la première surface principale du premier segment adjacent et la largeur.

7. Article comprenant des premiers et seconds articles polymères coextrudés selon l'une quelconque revendication précédente, dans lequel les seconds segments des premiers articles polymères coextrudés remplissent au moins partiellement les écartements des seconds articles polymères coextrudés, et dans lequel les seconds segments des seconds articles polymères coextrudés remplissent au moins partiellement les écartements des premiers articles polymères coextrudés.

8. Article selon la revendication 7, dans lequel le premier article polymère coextrudé a une surface principale opposée aux écartements du premier article polymère coextrudé fixé à un premier substrat, et dans lequel le second article polymère coextrudé a une surface principale opposée aux écartements du second article polymère coextrudé fixé à un second substrat.

9. Procédé de fabrication d'un article polymère coextrudé selon l'une quelconque des revendications 1 à 6, le procédé comprenant :
la fourniture d'une filière d'extrusion comprenant une pluralité de cales positionnées adjacentes les unes aux autres, les cales définissant ensemble une première cavité, une deuxième cavité, une troisième cavité, et une fente de filière, dans lequel la fente de filière a une ouverture distale, dans lequel la fente de filière comprend une première pluralité d'orifices, une deuxième pluralité d'orifices, et une troisième pluralité d'orifices, dans lequel la pluralité de cales comprend une première pluralité d'une séquence répétée de cales qui fournissent ensemble une voie de passage de fluide entre la première cavité et un premier orifice et fournissent également ensemble une voie de passage de fluide entre la troisième cavité et le troisième orifice, une deuxième pluralité d'une séquence répétée de cales qui fournissent ensemble une voie de passage de fluide entre la deuxième cavité et un deuxième orifice, une troisième pluralité d'une séquence répétée de cales qui fournissent ensemble une voie de passage de fluide entre la première cavité et un premier orifice et fournissent également ensemble une voie de passage de fluide entre la troisième cavité et un troisième orifice, et une quatrième pluralité d'une séquence répétée de cales qui fournissent ensemble une voie de passage de fluide entre la première cavité et un premier orifice ;
la fourniture par l'intermédiaire de l'extrusion d'un premier matériau vers la première cavité de la filière d'extrusion, d'un deuxième matériau vers la deuxième cavité de la filière d'extrusion, et d'un troisième matériau vers la troisième cavité de la filière d'extrusion, dans lequel les premier et troisième ou deuxième et troisième matériaux sont différents ;
l'extrusion d'une couche à partir de l'ouverture distale de la fente de filière ; et
la trempe de la couche extrudée.

10. Article polymère coextrudé comprenant :
des premiers segments ayant chacun des première et deuxième surfaces principales opposées et une épaisseur, les premiers segments comprenant un premier matériau ;
des seconds segments comprenant un deuxième matériau, dans lequel des premiers segments adjacents sont réunis par l'intermédiaire d'un second segment, dans lequel au moins 10 pour cent en nombre des seconds segments s'étendent à partir de la seconde surface principale au-delà de la première surface principale de chaque premier segment adjacent et a une extrémité distale, les seconds segments ayant des première et seconde surfaces principales, dans lequel il y a un écartement entre des seconds segments adjacents ; et
de l'adhésif sur la première surface principale des premiers segments,
dans lequel les premiers segments, les seconds segments et l'adhésif s'étendent chacun de manière continue sur au moins 5 millimètres.

11. Article polymère coextrudé selon la revendication 10, dans lequel chaque second segment a une hauteur s'étendant de la première surface principale du premier segment adjacent à l'extrémité distale de ce second segment, dans lequel des paires adjacentes de seconds segments dans un motif répétitif ont des hauteurs différentes, dans lequel un second segment ayant sa surface principale dépourvue d'adhésif est plus court que le second segment dans la paire ayant de l'adhésif sur les surfaces principales de son côté ; et/ou dans lequel les seconds segments ont un rapport d'aspect d'au moins 2:1, ledit rapport d'aspect étant le rapport entre la hauteur de la première surface principale du premier segment adjacent et la largeur.

12. Article polymère coextrudé selon l'une quelconque de la revendication 10 ou 11, dans lequel il y a au moins l'une parmi une ligne de démarcation entre les premier et second segments ou une ligne de démarcation entre l'adhésif et des premiers segments.

13. Article comprenant des premiers et seconds articles polymères coextrudés selon l'une quelconque des revendications 10 à 12, dans lequel les seconds segments des premiers articles polymères coextrudés remplissent au moins partiellement les écartements des seconds articles polymères coextrudés, et dans lequel les seconds segments des seconds articles polymères coextrudés remplissent au moins partiellement les écartements des premiers articles polymères coextrudés.

14. Article selon la revendication 13, dans lequel le premier article polymère coextrudé a une surface principale opposée aux écartements du premier article polymère coextrudé fixé à un premier substrat, et dans lequel le second article polymère coextrudé a une surface principale opposée aux écartements du second article polymère coextrudé fixé à un second substrat.

15. Procédé de fabrication d'un article polymère coextrudé selon les revendications 10 à 12, le procédé comprenant :
la fourniture d'une filière d'extrusion comprenant une pluralité de cales positionnées adjacentes les unes aux autres, les cales définissant ensemble une première cavité, une deuxième cavité, une troisième cavité, et une fente de filière, dans lequel la fente de filière a une ouverture distale, dans lequel la fente de filière comprend une première pluralité d'orifices, une deuxième pluralité d'orifices, et une troisième pluralité d'orifices, dans lequel la pluralité de cales comprend une première pluralité d'une séquence répétée de cales qui fournissent ensemble une voie de passage de fluide entre la première cavité et un premier orifice et fournissent également ensemble une voie de passage de fluide entre la troisième cavité et le troisième orifice, une deuxième pluralité d'une séquence répétée de cales qui fournissent ensemble une voie de passage de fluide entre la deuxième cavité et un deuxième orifice, dans lequel le deuxième orifice est colinéaire avec le premier orifice, dans lequel le deuxième orifice s'étend à partir du premier côté du premier orifice à une distance au-delà du second côté du premier orifice,
la fourniture par l'intermédiaire de l'extrusion d'un premier matériau vers la première cavité de la filière d'extrusion, d'un deuxième matériau vers la deuxième cavité de la filière d'extrusion, et d'un troisième matériau vers la troisième cavité de la filière d'extrusion, dans lequel les premier et troisième ou deuxième et troisième matériaux sont différents ;
l'extrusion d'une couche à partir de l'ouverture distale de la fente de filière ; et
la trempe de la couche extrudée.
